# EUROPEAN PATENT SPECIFICATION

(11) **EP 3 249 025 B1**
(45) Date of publication and mention of the grant of the patent: **17.07.2019**
(21) Application number: 16740284.1
(22) Date of filing: 22.01.2016
(51) Int. Cl.: F16D 69/02, C08L 61/06

(54) **FRICTION MATERIAL**
REIBUNGSMATERIAL
MATÉRIAU DE FROTTEMENT

(30) Priority: 23.01.2015 JP 2015011409
(43) Date of publication of application: 29.11.2017
(73) Proprietor: Akebono Brake Industry Co., Ltd., Tokyo 103-8534 (JP)
(72) Inventor: KUROE Motoki, Tokyo 103-8534 (JP); SATO Takashi, Tokyo 103-8534 (JP)
(74) Representative: Grünecker Patent- und Rechtsanwälte PartG mbB
(86) International application number: PCT/JP2016/051826
(87) International publication number: WO 2016/117677

(56) References cited:
- CN-A- 104 193 181
- JP-A- S5 924 778
- JP-A- 2000 191 800
- JP-A- 2000 205 318
- JP-A- 2001 107 027
- JP-A- 2014 025 014
- US-B1- 6 190 761

## Description

### Technical Field

The present invention relates to a friction material for brakes, which is used in automobiles, railway vehicles, industrial machines, and the like.

### Background Art

A friction material for use in brakes of disc brakes and drum brakes, clutches, or the like to be used in automobiles and the like is generally composed of materials such as a friction modifier for imparting a friction function and adjusting its friction performance, a fibrous base material for exerting a reinforcing function, and a binder for integrating these materials to impart strength. Since the friction material plays a role of frictionally engaging with a counter material thereof to convert kinetic energy into heat energy, there are required excellent heat resistance, wear resistance, high friction coefficient, stability of the friction coefficient, little generation of brake squeal (squeal characteristics), and the like.

Further, in order to improve mechanical strength and heat resistance of the friction material, it has been performed to blend metal fibers or metal particles into the friction material. On the other hand, for the purpose of exerting no adverse effect on the environment, there has been demanded a friction material substantially free of a copper component that is a heavy metal.

Patent Document 1 describes a friction material containing one or more selected from potassium carbonate, potassium hydrogen carbonate, sodium carbonate, and sodium hydrogen carbonate in an amount of 0.2 to 5.0% by weight relative to the whole amount of a friction material composition, as a friction material of NAO material free of a copper component.

Patent Document 2 describes a friction material composition containing 0.2 to 5% by weight of sodium carbonate or potassium carbonate as an alkali metal salt.

In addition, Patent Document 3 describes a semi-metallic friction material containing an auxiliary material selected from zinc carbonate, magnesium carbonate, lithium carbonate, potassium carbonate, and the like.

Patent Document 4 discloses a friction material comprising a base matrix wherein said base matrix comprises a fibrous reinforcement, a friction modifier, a lubricant and a binder, and a water-repellant fluoropolymer, wherein said friction material is a solid.

Patent Document 5 relates to a glass fiber comprising SiO₂, Al₂O₃, CaO, MgO, K₂O, Na₂O, B₂O₃, Li₂CO₃, CeO₂, Fe₂O₃, WO₃, TiO₂, MnO₂ and ZrO₂.

### Background Art Documents

### Patent Documents

Patent Document 1: JP 2014-25014 A
Patent Document 2: JP 2001-107027 A
Patent Document 3: JP 59-24778 A
Patent Document 4: US 6,190,761 B1
Patent Document 5: CN 104193181 A

### Summary of Invention

### Technical Problem

However, in the friction material of Patent Document 1, fade resistance is improved but wear resistance is not improved. Further, since sodium carbonate and potassium carbonate have deliquescence, there is a possibility that they become liquid through absorption of moisture in the air. Moreover, the friction material of Patent Document 2 contains a copper component such as a copper fiber and a rust-preventive effect is obtained by the incorporation of sodium carbonate or potassium carbonate, but effectiveness (friction coefficient) and wear resistance are not improved. In Patent Document 3, disclosed in Embodiments are only friction materials containing zinc carbonate or magnesium carbonate as an auxiliary material, and the friction materials containing the carbonate exhibit insufficient fade resistance and wear resistance.

Accordingly, an object of the present invention is to provide a friction material that applies low load on the environment and exhibits improved friction characteristics, particularly improved fade resistance and wear resistance.

### Solution to Problem

As a result of intensive studies for achieving the above object, the present inventors have found that the fade resistance and wear resistance of a friction material can be improved by a friction material blended with lithium carbonate even when it contains no copper component. Thus, they have accomplished the present invention.

That is, the present invention relates to the following friction materials.
(1) A friction material as defined in claim 1.
(2) The friction material according to the above (1), wherein the content of lithium carbonate is from 0.1 to 10% by mass.

### Advantage of Invention

The friction material according to the present invention can improve the fade resistance and wear resistance of a friction material with substantially no necessity of blending a copper component that may exert an adverse effect on the environment.

### Description of Embodiment

The following will describe the friction material of the present invention in detail.

Incidentally, in the present Description, "mass" means "weight".

The friction material according to the invention contains lithium carbonate. Thereby, the fade resistance and wear resistance of the friction material can be improved.

The content of lithium carbonate is preferably from 0.1 to 10% by mass, and more preferably from 1 to 8% by mass over the entire friction material. When the content of lithium carbonate falls within such a range, friction performance can be improved without impairing the formability of the friction material.

As for the particle diameter of lithium carbonate, the average particle diameter is from 0.1 to 300 µm, and preferably from 1 to 150 µm. When the average particle diameter falls within such a range, the friction performance can be improved without impairing the dispersibility of materials and the formability of the friction material. The average particle diameter is a volume-average particle diameter (median diameter) measured by a laser diffraction particle size analyzer.

The friction material according to the invention contains a fibrous base material, a friction modifier, and a binder, in addition to the above component.

However, in the friction material of the invention, the content of copper is 0.5% by mass or less in terms of elemental copper and copper is preferably not contained. Incidentally, the term of "copper is not contained" means that a copper component is not contained as an effective component for exhibiting functions such as wear resistance and does not mean that there is not contained a copper component as an impurity or the like which is unavoidably contained in a minute amount in the friction material. The copper component includes copper itself and also a copper alloy with another metal such as zinc, nickel, manganese, aluminum, or tin and a copper compound such as a copper oxide or a copper sulfide.

As the fibrous base material to be contained in the friction material according to the invention, a fibrous base material usually used can be employed in a content usually used, and specifically, an organic fiber, an inorganic fiber, a metal fiber, or the like is used.

As the organic fiber, for example, an aromatic polyamide (aramid) fiber, a flame-resistant acrylic fiber, a cellulose fiber, or the like is used. As the inorganic fiber, for example, a ceramic fiber such as a potassium titanate fiber or an alumina fiber, a biosoluble inorganic fiber, a glass fiber, a carbon fiber, rock wool, or the like is used. Further, as the metal fiber, for example, an aluminum fiber, a zinc fiber, a steel fiber, or the like is used. However, there is not used a copper fiber, a bronze fiber, or a brass fiber, which contains a copper component. These fibers are used singly or two more thereof are used in combination. Also, the fibrous base material in the friction material is used in an amount of preferably from 1 to 40% by mass, more preferably from 5 to 35% by mass in the entire friction material.

Of these, as the inorganic fiber, the biosoluble inorganic fiber is preferred from the viewpoint of little influence on human body. As such a biosoluble inorganic fiber, there may be mentioned biosoluble ceramic fibers such as SiO₂-CaO-MgO-based fibers, SiO₂-CaO-MgO-Al₂O₃-based fibers, and SiO₂-MgO-SrO-based fibers, biosoluble rock wool, and the like.

A steel fiber or the like can be used as the metal fiber but, from the viewpoint of deterioration of the wear resistance, it is used in an amount of preferably 35% by mass or less, more preferably 30% by mass or less.

Into the friction modifier contained in the friction material of the invention, an inorganic filler, an organic filler, an abrasive, a solid lubricant, and the like may be appropriately mixed.

As the inorganic filler, there may be mentioned inorganic materials such as potassium titanate, barium sulfate, calcium carbonate, calcium hydroxide, vermiculite, and mica and powders of metals such as aluminum, tin, and zinc. They may be used singly or two or more thereof are used in combination.

In the invention, the inorganic filler is used in an amount of preferably from 1 to 60% by mass, more preferably from 1 to 50% by mass in the entire friction material.

As the organic filler, there may be mentioned various rubber powders (raw rubber powders, tire powders, etc.), cashew dust, melamine dust, and the like. They may be used singly or two or more thereof are used in combination.

In the invention, the organic filler is used in an amount of preferably from 1 to 15% by mass, more preferably from 1 to 10% by mass in the entire friction material.

As the abrasive, there may be mentioned alumina, silica, magnesia, zirconia, zirconium silicate, chromium oxide, triiron tetraoxide (Fe₃O₄), chromite, and the like. They may be used singly or two or more thereof are used in combination.

In the invention, the abrasive is used in an amount of preferably from 5 to 30% by mass, more preferably from 10 to 30% by mass in the entire friction material.

As the solid lubricant, there may be mentioned graphite, antimony trisulfide, molybdenum disulfide, tin sulfide, polytetrafluoroethylene (PTFE), and the like. Further, the particle diameter of graphite is preferably from 1 to 1,000 µm. They may be used singly or two or more thereof are used in combination.

In the invention, the solid lubricant is used in an amount of preferably from 1 to 20% by mass, more preferably from 3 to 15% by mass in the entire friction material.

As the binder to be contained in the friction material according to the invention, various binders usually used can be employed. Specifically, there may be mentioned thermosetting resins such as straight phenol resins, various phenol resins modified with elastomers or the like, melamine resins, epoxy resins, and polyimide resins. As the elastomer-modified phenol resins, there may be mentioned acrylic rubber-modified phenol resins, silicone rubber-modified phenol resins, NBR rubber-modified phenol resins, and the like. Incidentally, these binders may be used singly or two or more thereof are used in combination.

Further, the binder in the friction material is used in an amount of preferably from 5 to 20% by mass, more preferably from 5 to 15% by mass in the entire friction material.

As specific aspects of a method for producing the friction material according to the invention, the method can be performed through well-known production steps. For example, the friction material can be prepared by blending the above respective components and subjecting the resulting blend to steps of pre-forming, thermoforming, heating, grinding, and the like according to usual production methods.

The following will show general steps in the production of a brake pad including the friction material:
(a) a step of forming a pressure plate into a predetermined shape by a sheet-metal press,
(b) a step of subjecting the above pressure plate to a degreasing treatment, a chemical conversion treatment, and a primer treatment,
(c) a step of blending raw materials such as a fibrous base material, a friction modifier, and a binder, homogenizing them sufficiently by mixing, and forming the resulting one at ordinary temperature under a predetermined pressure, thereby preparing a pre-formed body,
(d) a thermoforming step of applying predetermined temperature and pressure to the above pre-formed body and the pressure plate coated with an adhesive, thereby firmly bonding both members integrally (forming temperature of 130 to 180°C, forming pressure of 30 to 80 MPa, forming time of 2 to 10 minutes),
(e) a step of aftercuring the resulting one (150 to 300°C, 1 to 5 hours) and finally performing finishing treatments such as grinding, surface scorching, and painting.

### Embodiments

The following will specifically describe the present invention with reference to Embodiments. However, the invention should not be construed as being limited by these Embodiments in any way.

### [Embodiment 1]

### (Preparation of Friction Material)

After the raw materials described in Table 1 were mixed using a mixer at blending ratios shown in Table 1, the raw material mixture was charged into a thermoforming mold and forming under heating and pressurization was performed at 150°C under 50 MPa. The resulting formed body under heating and pressurization was subjected to a heat treatment at 250°C for 3 hours to prepare a friction material.

Incidentally, as lithium carbonate, one manufactured by Koujundo Chemical Laboratory, Co., Ltd. was used (average particle diameter of 138 µm).

### (Evaluation)

A friction characteristic test in accordance with JASO-C406 was performed on a brake dynamometer. Table 1 shows the minimum friction coefficient at a first fade and wear amount of the friction material after the end of the test.

### [Embodiments 2 to 14 and Comparative Examples 1 to 5]

Each of friction materials was prepared and evaluated except that the kinds and blending amounts of raw materials were changed as shown in Tables 1 and 2. The results are shown in Tables 1 and 2.

Incidentally, as lithium carbonate, ones manufactured by Koujundo Chemical Laboratory, Co., Ltd. were used (each average particle diameter of 138 µm, 2 µm, or 8 µm). As sodium carbonate (average particle diameter of 550 µm), potassium carbonate (average particle diameter of 340 µm), magnesium carbonate (average particle diameter of 14 µm), and zinc carbonate (average particle diameter of 13 µm), ones manufactured by Wako Pure Chemical Industries, Ltd. were used.

**[Table 1]**

| | | Embodiment 1 | Embodiment 2 | Embodiment 3 | Embodiment 4 | Comparative Example 1 | Comparative Example 2 | Comparative Example 3 | Comparative Example 4 | Comparative Example 5 |
|---|---|---|---|---|---|---|---|---|---|---|
| Blend of friction material (% by mass) | Phenol resin | 9.8 | 9.5 | 9 | 8 | 10 | 9 | 9 | 9 | 9 |
| | Lithium carbonate D50=138 µm | 0.2 | 0.5 | 1 | 2 | - | - | - | - | - |
| | Sodium carbonate | - | - | - | - | - | 1 | - | - | - |
| | Potassium carbonate | - | - | - | - | - | - | 1 | - | - |
| | Magnesium carbonate | - | - | - | - | - | - | - | 1 | |
| | Zinc carbonate | - | - | - | - | - | - | - | - | 1 |
| | Aramid pulp | 5 | 5 | 5 | 5 | 5 | 5 | 5 | 5 | 5 |
| | Potassium titanate | 25 | 25 | 25 | 25 | 25 | 25 | 25 | 25 | 25 |
| | Barium sulfate | 35 | 35 | 35 | 35 | 35 | 35 | 35 | 35 | 35 |
| | Graphite | 5 | 5 | 5 | 5 | 5 | 5 | 5 | 5 | 5 |
| | Cashew dust | 5 | 5 | 5 | 5 | 5 | 5 | 5 | 5 | 5 |
| | Zirconium silicate | 10 | 10 | 10 | 10 | 10 | 10 | 10 | 10 | 10 |
| | Calcium hydroxide | 2 | 2 | 2 | 2 | 2 | 2 | 2 | 2 | 2 |
| | Mica | 3 | 3 | 3 | 3 | 3 | 3 | 3 | 3 | 3 |
| | Total | 100 | 100 | 100 | 100 | 100 | 100 | 100 | 100 | 100 |
| Evaluation results of friction characteristics | First fade minimum µ | 0.23 | 0.25 | 0.26 | 0.26 | 0.15 | 0.18 | 0.17 | 0.15 | 0.18 |
| | Wear amount of friction material (mm) | 1.9 | 1.75 | 1.83 | 1.85 | 2.15 | 2.27 | 2.45 | 1.95 | 3.81 |

**[Table 2]**

| | | Comparative Example 1 | Embodiment 5 | Embodiment 6 | Embodiment 7 | Embodiment 8 | Embodiment 9 | Embodiment 10 | Embodiment 11 | Embodiment 12 | Embodiment 13 | Embodiment 14 |
|---|---|---|---|---|---|---|---|---|---|---|---|---|
| Blend of friction material (% by mass) | Phenol resin | 10 | 10 | 10 | 10 | 10 | 10 | 10 | 10 | 10 | 10 | 10 |
| | Lithium carbonate D50=138 µm | - | 1 | 4 | 6 | 8 | - | - | - | - | - | - |
| | Lithium carbonate D50=2 µm | - | - | - | - | - | 1 | 4 | 6 | - | - | - |
| | Lithium carbonate D50=8 µm | - | - | - | - | - | - | - | - | 1 | 4 | 6 |
| | Aramid pulp | 5 | 5 | 5 | 5 | 5 | 5 | 5 | 5 | 5 | 5 | 5 |
| | Potassium titanate | 25 | 25 | 25 | 25 | 25 | 25 | 25 | 25 | 25 | 25 | 25 |
| | Barium sulfate | 35 | 34 | 31 | 29 | 27 | 34 | 31 | 29 | 34 | 31 | 29 |
| | Graphite | 5 | 5 | 5 | 5 | 5 | 5 | 5 | 5 | 5 | 5 | 5 |
| | Cashew dust | 5 | 5 | 5 | 5 | 5 | 5 | 5 | 5 | 5 | 5 | 5 |
| | Zirconium silicate | 10 | 10 | 10 | 10 | 10 | 10 | 10 | 10 | 10 | 10 | 10 |
| | Calcium hydroxide | 2 | 2 | 2 | 2 | 2 | 2 | 2 | 2 | 2 | 2 | 2 |
| | Mica | 3 | 3 | 3 | 3 | 3 | 3 | 3 | 3 | 3 | 3 | 3 |
| | Total | 100 | 100 | 100 | 100 | 100 | 100 | 100 | 100 | 100 | 100 | 100 |
| Evaluation results of friction characteristics | First fade minimum µ | 0.15 | 0.26 | 0.26 | 0.28 | 0.3 | 0.28 | 0.3 | 0.3 | 0.28 | 0.28 | 0.3 |
| | Wear amount of friction material (mm) | 2.15 | 1.85 | 1.9 | 1.87 | 1.92 | 1.8 | 1.85 | 1.82 | 1.83 | 1.8 | 1.82 |

From the results of Tables 1 and 2, it was found that the friction materials of Examples containing lithium carbonate has a large minimum value of the friction coefficient at a first fade and the wear amount of the friction material after the end of the test was small as compared with the friction materials of Comparative Examples containing no lithium carbonate or containing the other carbonate salt other than lithium carbonate. Therefore, it can be said that the fade resistance and wear resistance of the friction material can be improved by blending lithium carbonate.

## Claims

1. A friction material comprising:
a fibrous base material;
a friction modifier; and
a binder,
wherein the content of copper in the friction material is 0.5% by mass or less in terms of elemental copper, and
wherein the friction material additionally comprises lithium carbonate, wherein an average particle diameter of the lithium carbonate is from 0.1 to 300 µm.

2. The friction material according to claim 1, wherein the content of the lithium carbonate is from 0.1 to 10% by mass.

## Patentansprüche

1. Reibungs-Material, das umfasst:
ein faseriges Trägermaterial;
einen Reibwertveränderer; sowie
ein Bindemittel,
wobei der Gehalt an Kupfer in dem Reibungs-Material 0,5 Gew.-% oder weniger, bezogen auf elementares Kupfer, beträgt, und
das Reibungs-Material zusätzlich Lithiumcarbonat umfasst, wobei ein durchschnittlicher Teilchendurchmesser des Lithiumcarbonats von 0,1 bis 300 µm beträgt.

2. Reibungs-Material nach Anspruch 1, wobei der Gehalt an dem Lithiumcarbonat 0,1 bis 10 Gew.-% beträgt.

## Revendications

1. Matériau de friction comprenant :
un matériau de base fibreux ;
un modificateur de friction ; et
un liant,
dans lequel le contenu en cuivre du matériau de friction est inférieur ou égal à 0,5 % en masse en termes de cuivre élémentaire, et
dans lequel le matériau de friction comprend en outre du carbonate de lithium, le diamètre de particule moyen du carbonate de lithium étant compris entre 0,1 µm et 300 µm.

2. Matériau de friction selon la revendication 1, dans lequel le contenu en carbonate de lithium est compris entre 0,1 % et 10 % en masse.
